# EUROPEAN PATENT APPLICATION

(11) **EP 0 880 887 A2**
(43) Date of publication of application: **02.12.1998**
(21) Application number: 98201716.2
(22) Date of filing: 23.05.1998
(51) Int. Cl.: A01G 25/16

(54) **"Electronic control unit for automatic watering systems with plural lines".**

(30) Priority: 29.05.1997 IT MI970384 U
(71) Applicant: CLABER S.P.A., I-33080 Fiume Veneto Pordenone (IT)
(72) Inventor: Roman, Gianfranco, 33087 Pasiano, (Pordenone) (IT); Brundisini, Andrea, 33170 Pordenone (IT)
(74) Representative: Mittler, Enrico

(57) **Abstract**

An electronic control unit for automatic watering systems with plural lines comprises a box casing (51) in which an electronic circuit (69) with a programmable elaboration unit and a voltage transformer (73) supplied with mains voltage are housed. In a position accessible from the outside of the box casing (51) program pre-setting and selection means (59, 62, 63; 91-94) for the elaboration unit and light indicators (64, 65; 91) suitable to signal the operating condition of the control unit and of the system being controlled are provided.

## Description

The present invention refers to an electronic control unit for automatic watering systems having plural lines.

The increasing demand for watering systems capable to activate and to disconnect themselves at programmable pre-fixed intervals and for time lengths is known.

This gave rise to a corresponding increase in the design of electronic control units for the aforementioned systems.

Initially they were control units with one line or at most two lines, that allowed to choose from among few non-modifiable programs. Then there was a change to more sophisticated control units, meant to control watering systems with plural lines according to very different programs, susceptible to modification either by the same user or by a specifically skilled operator.

In any case it has always been necessary to resort to a specialised installer who would opportunely predispose the electric networking of the control unit, obviously at low tension, to the high tension power mains system.

In view of this state of the art, object of the present invention has been to provide an electronic control unit, that would allow to control the activation of automatic watering systems with plural lines and that would be so easy and quick to install that could even be bought and installed by the same user without any particular trouble.

According to the invention, such object has been obtained by an electronic control unit comprising a box casing for housing an electronic circuit with a programmable elaboration unit and power supply means for said electronic circuit, and program pre-setting and selection means for said elaboration unit which are accessible from the outside of said box casing, characterised in that said power supply means comprise a voltage transformer housed inside said box casing and supplied with mains voltage.

In this way, even a simple user can avail of an electronic control unit that contains the electronic circuitry necessary for the modifiable programmed activation of a watering system with plural lines and that requires for its installation the simple connection of its power outlets with the controlling actuators of the single lines and of its power inlet to a normal power socket at mains voltage.

Depending on the needs the control unit will either provide for a series of pre-set programs that a user with even little experience will be able to select and possibly to modify by means of an easy and quick manoeuvre or it will make it possible for a more experienced user to set the programs to liking, since the beginning.

The two possibilities will be provided by two embodiments of the control unit according to the invention, that will be now described as a non-limiting example with reference to the enclosed drawings, where:
Figure 1 shows a perspective view of a first control unit according to the present invention;
Figure 2 shows said control unit in longitudinal section according to line II-II of Fig. 1;
Figure 3 shows in top plan, in a magnified scale and with its cover removed, a fore external area of said control unit that comprises a selector of modifiable pre-set watering cycles;
Figure 4 shows in top plan, in a magnified scale and with its cover removed, a back internal area of said control unit which comprises a voltage transformer, an inlet for electric supply wires for said transformer, an outlet for electric wires for controlling actuators of a watering system and blocking clamps for said electric wires;
Figure 5 shows in a magnified scale a possible embodiment of the electromechanical coupling between the blocking clamps and the electronic circuit of the control unit;
Figure 6 shows in a perspective view a second control unit according to the present invention;
Figure 7 shows in a top plan, with its cover removed, an external area of said control unit that comprises a display and buttons for entering and storing watering programs.

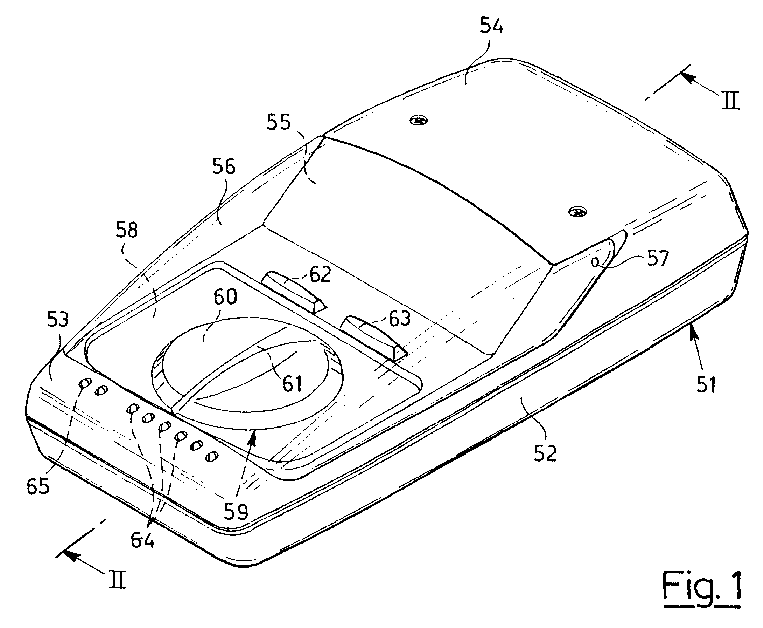

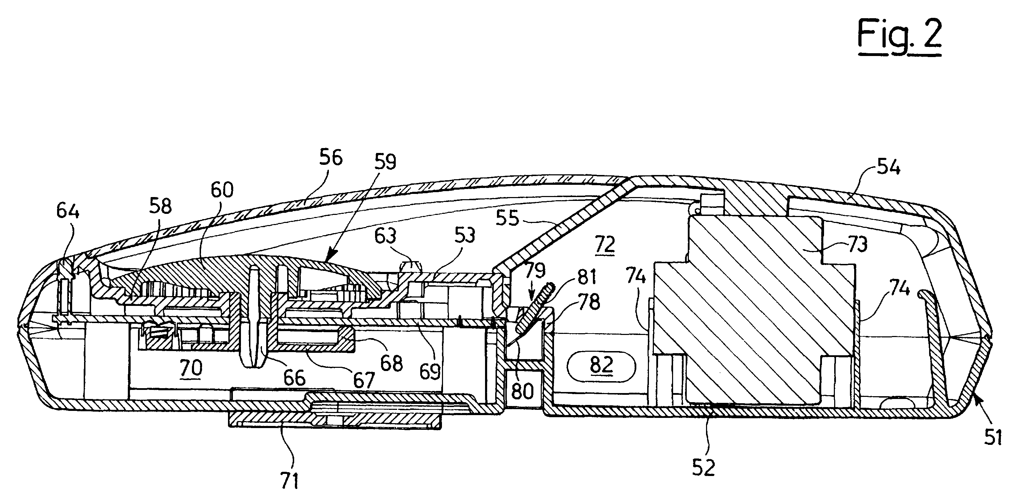

The control unit shown in Figures 1-5 has a box casing 51 formed by a base 52, by a fore cover 53 of substantially flat shape and by a higher back cover 54 joined to the fore one by means of an oblique wall 55 (Figures 1 and 2). A transparent lid 56 revolving around pivot pins 57 provided on the back cover 54 is normally placed in the closed position of Figures 1 and 2 as a protection of the fore cover 53 and of the oblique wall 55.

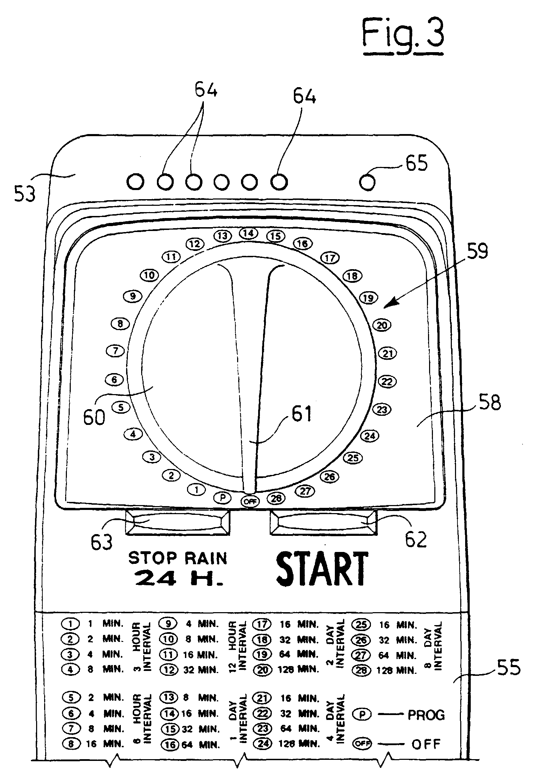

On a panel 58 of the fore cover 53 a programme selector 59 is rotatably located, that is formed by a rotatable circular knob 60 with an index 61 settable in any one of a sequence of angular positions defined by position indications 1-28 (each one corresponding to a specific watering program), P and OFF (Fig. 3).

On the flat fore cover 53 two buttons 62 and 63 with indicating inscriptions START and STOP RAIN 24H are also provided, as well as six grouped light indicators 64 and an additional light indicator 65 at a distance from the previous ones.

On the oblique wall 55 the same position indications 1-28, P and OFF are provided, with inscriptions indicating the watering cycles corresponding to the various angular positions of the selector 59 close to them.

The selector 59 and the buttons 62 and 63 are accessible by the user by lifting the transparent lid 56 by rotation around the pivot pins 57.

As shown in Fig. 2, the knob 60 of the selector 59 has a pin 66 that passes through the flat fore cover 53 and that bears a fixedly mounted small plate 67, below the cover itself, provided with a sliding contact element 68 which co-operates with a microprocessor electronic circuit (not shown in details) formed on a circuit card 69 placed as a cover of a first chamber 70 defined in the fore part of the base 52 for housing one or more buffer batteries (not shown) insertable through a lower opening with removable door 71.

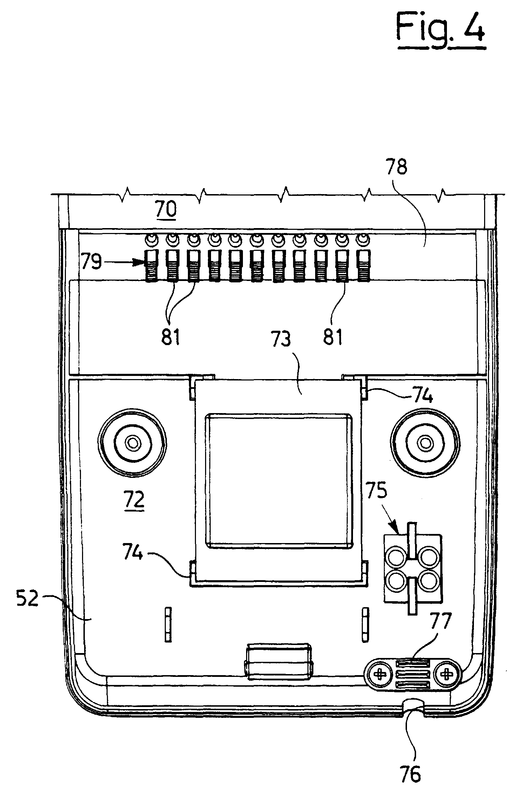

The back cover 54 together with the back part of the base 52 defines in turn a second chamber 72 in which a voltage transformer 73 kept in position by angular posts 74 (Figures 2 and 4) is housed.

Inside the chamber 72 a terminal board 75 is also housed (Fig. 4) suitable for the electrical connection of the transformer 73 with input electrical wires (not shown) at a mains voltage (220V), that enter the same chamber through an inlet opening 76 and that are locked in their position by a fixing over-crossing plate (Fig. 4).

The two chambers 70 and 72 are separated by a divisor septum 78, which acts also as a housing for a clamp board 79 formed by a plurality of single elastic plate clamps 80 with activation lever 81 (Figure 2 and 4) of the type described in the Italian patent application MI96A001563 of 25 July 1996. The clamp board 79 is used for fixing the connection electric wires (not shown) between the transformer 73 and the electronic circuit mounted on the circuit card 69 and output electric wires (not shown) of the aforementioned electronic circuit, which are connected with the actuators of the watering plant to which the control unit is designated, through a lateral opening 82 on the base 52 (Fig. 2), in such a way as to provide for the activation command of respective water feeding lines of the system.

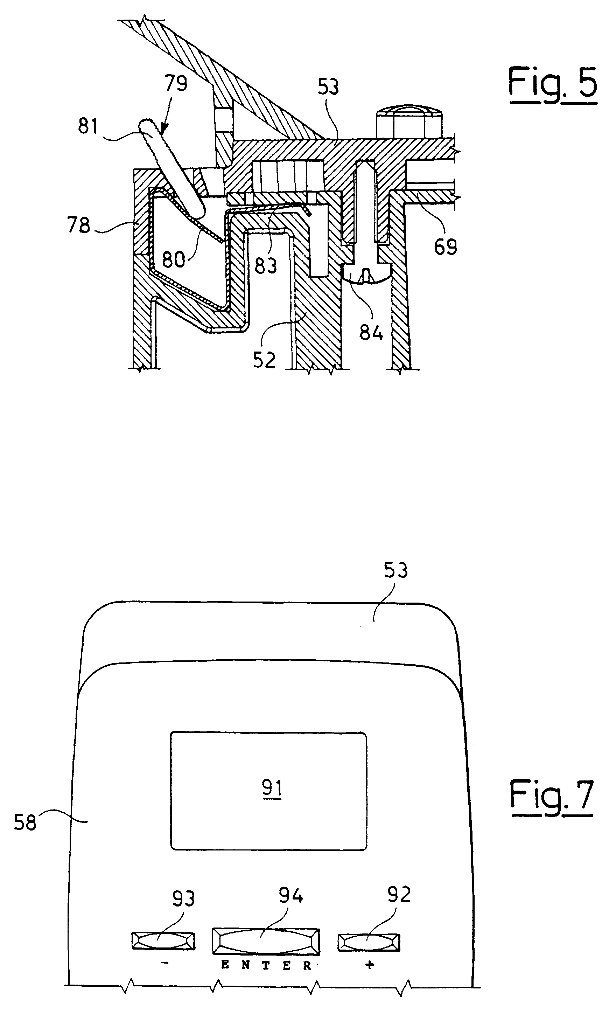

A preferred embodiment of the electromechanical coupling between the clamp board 79 and the circuit card 69 is illustrated as an example in Fig. 5, where it is possible to see that such coupling is realised by taking advantage of the elasticity of a terminal portion 83 of the single elastic plates 80, that is biased to the position of electric and mechanical contact with the card 69, held in position itself by screws 84 used for the mutual fixing of the base 52 and of the cover 53.

Owing to the aforementioned conformation, the control unit of Figures 1-5 must be simply connected to a normal power mains socket, obviously besides to the actuators of the watering system.

At that point the control unit is ready for its operation according to the modes fixed by the initial programming of the microprocessor and as a function of the angular position of the rotary selector 59 and of the activation or not of buttons 62 and 63, repeating for the most part what described in the previous application EP-A-0748584 of the same applicant and differing besides in some innovative aspects that are the object of a simultaneous patent application, also in the name of the same applicant, that is considered to be here incorporated as a reference.

The various activation programs of the actuators that have previously been fixed during the stage of preparation of the microprocessor correspond to the ones indicated on the oblique wall 55 of the control unit cover (Fig. 3). However, it is possible to modify them.

The buttons 62-63 and the light indicators 64-65 have respectively the following functions:
Functions of the START button 62:
   - manual starting of the watering cycle pointed at by the rotary selector 59;
   - feeding of the watering cycle currently under course to the next exit;
   - start of programming when the rotary selector 59 points at the position P;
   - assignment of the watering time pointed at by the rotary selector 59 to the exit relative to the LED indicator currently being lightened and lightening of the next indicator.
Functions of the STOP RAIN button 63:
   - setting in pause of the control unit for a period of 24 hours starting from the time in which the button is pressed;
   - restoring of the operation mode in case the control unit is already in pause.

It should be noted that the STOP RAIN button will not have any effect when the rotary selector points at the OFF or P position and when the control unit is in the programming stage.

The light indicator 65 relates to the mains power supply and operates according to the following terms:
- lightened in a constant way, it indicates the presence of the mains power supply;
- lightened in a slow intermittent way (for example, 0.5 sec. on, 0.5 sec. off) it indicates the absence of mains voltage and that the operation is granted by the battery.

The light indicators 64 relate to the operation of the various exits connected to respective actuators of the watering system and they operate according to the following terms:
- lightened in a constant way, each indicator 64 signals that the relative exit is active;
- lightened in a slow intermittent way (for example, 0.5 sec. on, 0.5 sec. off) each indicator 64 signals that the respective exit is in short circuit.
- lightened in a quick intermittent way (for example, 0.1 sec. on, 0.1 sec. off), each indicator 64 signals that the control unit is in a stage of programming of the watering times.
- lightened in a quick sequence from left to right the indicators 64 signal the state of pause.

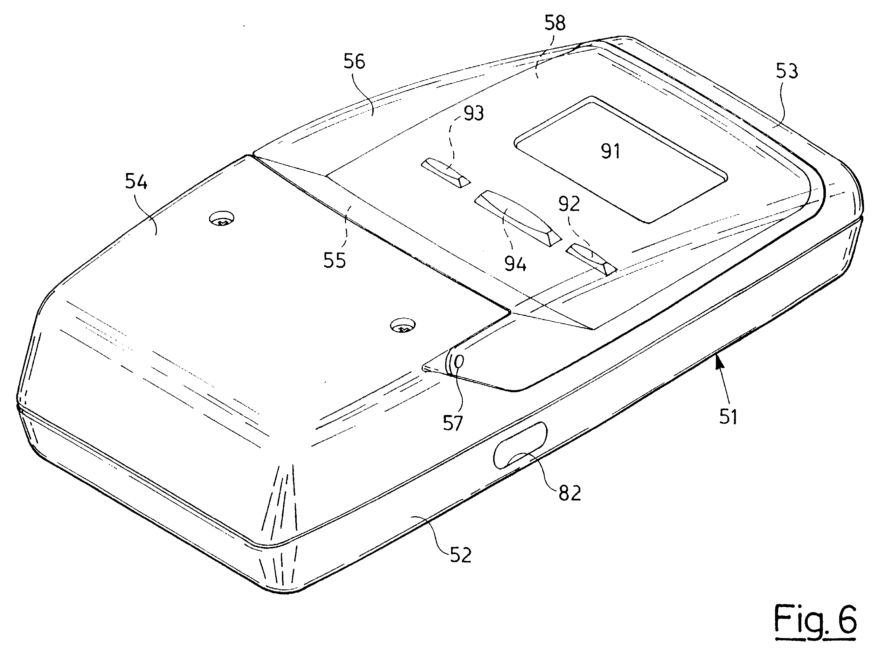

The control unit of Figures 6 and 7 is conceptually similar to that of Figures 1-5, of which it repeats the conformation of the box casing 51 (Fig. 6) and the positioning, inside the same casing, of the circuit card 69, of the voltage transformer 73 and of the clamp boards 75 and 79, as well as the presence of the inlet and outlet openings 76 and 82.

It differs instead in the controlling part inserted in the panel 58 of the fore cover 53, which in this case comprises a liquid crystals display 9, two buttons 92 and 93 ("+" and "-") for the advance and backing of the program pages and a button 94 ("ENTER") for the memorisation and confirm of the program data being chosen. The display 91 acts also as a device for the light signal of the operating condition of the control unit and of the system being controlled.

The microprocessor elaboration unit is obviously programmed in a different way, not with selectionable and modifiable pre-set programs any more but with the possibility of free programming by the user, according to procedures that repeat for the most part those of the control unit described in the previous application EP-A-0703516 of the same applicant and differ from those in some innovative aspects that are the object of a simultaneous patent application, also in the name of the same applicant, that is considered to be here incorporated as a reference.

## Claims

1. Electronic control unit for automatic watering systems with plural lines, comprising a box casing (51) for housing an electronic circuit (69) with a programmable elaboration unit and power supply means for said electronic circuit, and program pre-setting and selection means (59, 62, 63; 91,-94) for said elaboration unit (83) which are accessible from the outside of said box casing (51), characterised in that said power supply means comprise a voltage transformer (73) supplied with mains voltage.

2. Electronic control unit according to claim 1, characterised in that it comprises a clamp board (79) for fixing electric wires for the connection between said transformer (73) and said electronic circuit (69) and electric wires for the connection between said electronic circuit (69) and external actuators of the watering lines, said clamp board (79) being composed of a plurality of elastic plate terminals (80) and of respective activation levers (81) for said terminals.

3. Electronic control unit according to claim 2, characterised in that each one of said spring terminals (80) is made of a folded plate element that provides for a terminal portion (83) biased to a position of electric and mechanical contact with said electronic circuit (69).

4. Electronic control unit according to claim 1, characterised in that said power supply means also comprise at least one electric battery utilisable in the absence of mains power supply.

5. Electronic control unit according to claim 4, characterised in that it comprises a light indicator (65) suitable to signal the presence or the absence of mains power supply.

6. Electronic control unit according to claim 4, characterised in that it comprises a plurality of light indicators (64) suitable to signal the condition of operation of the actuators being controlled.

7. Electronic control unit according to claim 1, characterised in that said program pre-setting and selection means (59, 62, 63; 92-94) comprise a rotary selector (69) settable in a plurality of selectable angular positions, to each one of which a specific watering program corresponds.

8. Electronic control unit according to claim 7, characterised in that said program pre-setting and selection means (59, 62, 63; 92-94) comprise also a start button (62) and a stop button (63).

9. Electronic control unit according to claim 1, characterised in that said program pre-setting and selection means (59, 62, 63; 92-94) comprise a liquid crystals display (91), two buttons (92, 93) for the advance and the backing of the program pages and a button (94) for the memorisation and confirm of chosen program data.

10. Electronic control unit according to claim 1, characterised in that it comprises a transparent lid (56) rotatably overlapping said box casing (51) for the protection of said prograin pre-setting and selection means (59, 62, 63; 92-94).
